# EUROPÄISCHE PATENTSCHRIFT

(11) **EP 2 558 267 B1**
(45) Veröffentlichungstag und Bekanntmachung des Hinweises auf die Patenterteilung: **09.10.2019**
(21) Anmeldenummer: 11708992.0
(22) Anmeldetag: 01.03.2011
(51) Int. Cl.: B29C 45/14, B29C 44/18, B62D 29/00

(54) **STRUKTURBAUTEIL FÜR EINEN KRAFTWAGEN UND VERFAHREN ZU DESSEN HERSTELLUNG**
STRUCTURAL ELEMENT FOR A VEHICLE AND ITS PROCESS OF FABRICATION
ELEMENT DE STRUCURE POUR UN VÉHICULE ET SON PROCÉDÉ DE FABRICATION

(30) Priorität: 10.04.2010 DE 102010014503
(43) Veröffentlichungstag der Anmeldung: 20.02.2013
(73) Patentinhaber: Daimler AG, 70327 Stuttgart (DE)
(72) Erfinder: REESE, Eckhard, 21641 Apensen (DE)
(74) Vertreter: JENSEN & SON
(86) Internationale Anmeldenummer: PCT/EP2011/000978
(87) Internationale Veröffentlichungsnummer: WO 2011/124302

(56) Entgegenhaltungen:
- EP-A1- 0 891 918
- EP-A2- 1 057 718
- EP-A2- 1 714 855
- US-A1- 2007 090 666

## Beschreibung

Die Erfindung betrifft ein Strukturbauteil für einen Kraftwagen der in den Oberbegriffen der Patentansprüche 1 bzw. 3 angegebenen Art. Des Weiteren betrifft die Erfindung ein Verfahren zur Herstellung eines solchen Strukturbauteils gemäß den Oberbegriffen der Patentansprüche 7 bzw. 9.

Die US 2007/090666 A1 zeigt ein Verstärkungsbauteil für Kraftfahrzeugstrukturbauteile wie Türen, Rahmen usw. Das Verstärkungsbauteil besteht aus einem Kunststoff oder Metall und ist als Profil mit Rippenstruktur einstückig ausgebildet. Das verrippte Verstärkungsbauteil bildet ein Trägerteil für eine Kunststoffmasse, die in von der Rippenstruktur eingegrenzten Kammern platziert ist und als zusätzliche Verstärkung für das Trägerteil bzw. das Kraftfahrzeugstrukturbauteil dient.

Aus der EP 0 995 668 B1 ist bereits ein Strukturbauteil für einen Kraftwagen als bekannt zu entnehmen, welcher ein mehrschaliges Trägerteil aus Blechschalen aufweist. Zumindest bereichsweise ist dieses Metallträgerteil durch eine Versteifungsstruktur aus Kunststoff zu einem Hybridbauteil verstärkt, wobei die Versteifungsstruktur aus einer Mehrzahl von Rippen gebildet ist, welche wenigstens eine hohle Kammer des Hybridbauteils zumindest partiell begrenzen.

Weiterhin zeigt die EP 1 714 855 A2 ein tragendes Karosseriebauteil eines Kraftfahrzeugs mit einem Stahlblech, an das ein weiteres Verstärkungsrippen tragendes Bauelement angespritzt wird, um eine gewünschte Steifigkeit des tragenden Bauteils zu erreichen.

Die EP 1 057 718 A2 offenbart den Zusammenbau zweier offener U-Profile, von denen das eine das andere umgreift, wobei ein Zwischenraum zwischen den Profilen vorgesehen ist, der mit einem Strukturschaum ausgeschäumt ist.
Schließlich ist noch aus der EP 0 891 918 A1 bekannt, dass in einem U-Profil zwei längs beabstandete Querwände eingezogen sind, zwischen denen ein thermisch expandierendes Harz eingebracht ist, wodurch das Profil eine Verstärkung erfährt.

Derartige Strukturbauteile sind in mannigfacher Ausführung derzeit im Einsatz bei Kraftwagen. Beispielsweise als Seitenaufprallträger von Fahrzeugtüren oder als Biegequerträger für Frontendmodule oder Fußgängerschutzeinrichtungen werden derartige Strukturbauteile eingesetzt. Allen Strukturbauteilen ist es dabei gemeinsam, dass diese eine Stabilität bzw. Steifigkeit einerseits und ein möglichst geringes Gewicht andererseits aufweisen sollen, wobei die jeweiligen Verfahren zur Herstellung eines solchen Strukturbauteils möglichst kostengünstig und schnell darstellbar sein sollen.

Aufgabe der vorliegenden Erfindung ist es, ein Verfahren zur Herstellung eines solchen Strukturbauteils zu schaffen, mittels welchem sich Strukturbauteile mit besonders hohem Energieabsorptionspotential realisieren lassen, welche darüber hinaus einfach und schnell herstellbar sind.

Diese Aufgabe wird erfindungsgemäß durch ein Verfahren zur Herstellung eines Strukturbauteils mit den Merkmalen des Patentanspruchs 1 erreicht.

Ein Strukturbauteil, welches gemäß dem Verfahren nach Patentanspruch 1 hergestellt wurde umfasst wenigstens ein Trägerteil beispielsweise in Form eines rohrartigen FVK- oder Metallträgerteils, welches zumindest bereichsweise durch eine angespritzte verrippte Versteifungsstruktur aus Kunststoff zu einem Hybridbauteil verstärkt ist, wobei wenigstens eine Kammer des Hybridbauteils zumindest partiell durch Wandbereiche der Versteifungsstruktur begrenzt ist, und wobei in der wenigstens einen Kammer ein weiterer Kunststoff, insbesondere ein Schaumstoff, angeordnet ist. Dabei ist es bekannt, innerhalb der wenigstens einen, durch die Versteifungsstruktur aus Kunststoff gebildeten Kammer einen weiteren Kunststoff insbesondere in Form eines energieabsorbierenden Schaumstoffes zu integrieren. Durch das Ausfüllen der Kammer mit einem weiteren, von der Versteifungsstruktur abweichenden Kunststoff, insbesondere einem Schaumstoff, wird somit das Energieabsorptionsvermögen und/oder die Steifigkeit bzw. Stabilität des Strukturbauteils weiter erhöht.

Die erläuterten Vorteile gelten für das Verfahren gemäß dem Patentanspruch 1. Dieser zeichnet sich des Weiteren insbesondere dadurch aus, dass hierdurch Strukturbauteile besonders einfach und kostengünstig hergestellt werden können, indem gemäß Patentanspruch 1 der Kunststoff der Versteifungsstruktur und der weitere Kunststoff, insbesondere der Schaumstoff, in derselben Einrichtung geschaffen werden in welcher ein drehbares Werkzeugteil zwei Spritzgussdüsen und mit einerseits einer Spritzgussdüse zum Aufbringen der aus Kunststoff gestalteten Versteifungsstruktur auf dem Trägerteil und andererseits einer Spritzgussdüse zum Aufbringen des Kunststoffs bzw. des Schaumstoffs beinhaltet.

Weitere Vorteile, Merkmale und Einzelheiten der Erfindung ergeben sich aus der nachfolgenden Beschreibung bevorzugter Ausführungsbeispiele sowie anhand der Zeichnungen 5 und 6; die anderen Zeichnungen zeigen den Stand der Technik; diese zeigen in:

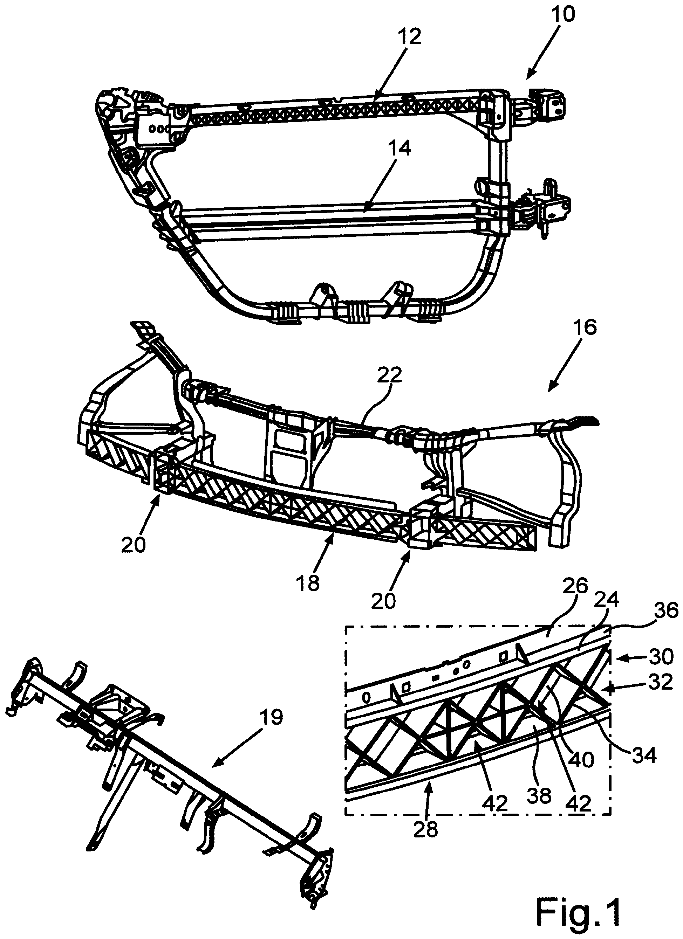

- Fig. 1: eine Mehrzahl von Anwendungsmöglichkeiten von im Weiteren noch näher beschriebenen Strukturbauteilen für einen Kraftwagen, wobei diese Strukturbauteile gemäß der oberen Darstellung von Fig. 1 beispielsweise als Strukturbauteil eines Trägerteils einer Seitentür eines Kraftwagens bzw. gemäß der mittleren Darstellung in Fig. 1 als Biegequerträger einer Trägerstruktur eines Frontends eines Personenkraftwagens ausgebildet sein kann, wobei in der unteren Darstellung von Fig. 1 ausschnittsweise eine mögliche Ausführungsform des Strukturbauteils dargestellt ist, oder gemäß der Darstellung links unten in Fig. 1 als Cockpitquerträger;
- Fig. 2a bis 2f: jeweilige ausschnittsweise Vorderansichten und Schnittansichten auf mögliche Ausführungsformen des Strukturbauteils, welches vorliegend als offenes Profil für Biegequerträger einer Trägerstruktur eines Frontmoduls ausgebildet ist;
- Fig. 3a, 3b: jeweils eine Schnittansicht über weitere mögliche Ausführungsformen des Strukturbauteils, welches vorliegend ebenfalls als Biegequerträger einer Trägerstruktur eines Frontmoduls ausgebildet ist;
- Fig. 4: vier ausschnittsweise Längsschnittansichten sowie zugehörige Querschnittsansichten durch Strukturbauteile in Form von umfänglich geschlossenen Profilen zur Ausbildung von Biegequerträgern für eine jeweilige Trägerstruktur eines Frontendmoduls oder Querträgers des Cockpits;
- Fig. 5: eine Prinzipdarstellung der Erläuterung des Verfahrens zur Herstellung eines Strukturbauteils gemäß den Fig. 1 bis 4;
- Fig. 6: eine schematische Darstellung der Abfolge einzelner Verfahrensschritte zur Herstellung eines als Biegequerträger einer Trägerstruktur eines Frontendmoduls ausgebildeten Strukturbauteils;
- Fig. 7: ebenfalls eine schematische Darstellung der Abfolge von Verfahrensschritten eines zu Fig. 6 alternativen Verfahrens zur Herstellung eines Strukturbauteils in Form eines Biegequerträgers einer Trägerstruktur eines Frontendmoduls;
- Fig. 8: ebenfalls eine schematische Darstellung einer Abfolge einer Mehrzahl von Verfahrensschritten eines zu den Fig. 6 bzw. 7 alternativen Verfahrens zur Herstellung eines Strukturbauteils, welches wiederum als Biegequerträger einer Trägerstruktur eines Frontendmoduls ausgebildet ist;
- Fig. 9: eine schematische Darstellung eines weiteren Verfahrens zur Herstellung eines Strukturbauteils beispielsweise in Form eines Biegequerträgers'für eine Trägerstruktur eines Frontmoduls eines Personenkraftwagens; und in
- Fig. 10: eine perspektivisch dargestellte Vorrichtung zur Schaumeinbringung in einen Querträger.

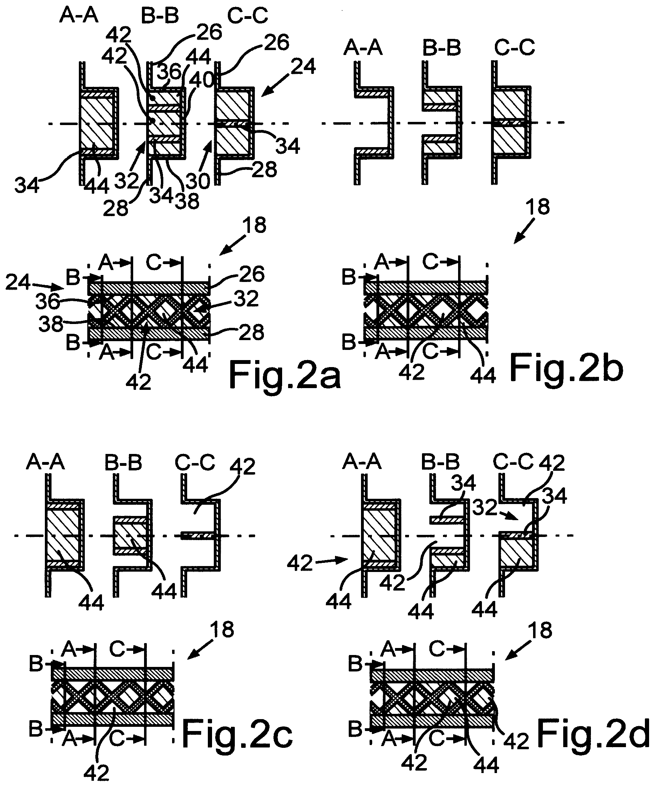

In Fig. 1 ist in der oberen Darstellung ein Türträger 10 für eine Seitentür eines Kraftwagens dargestellt. Dieser Türträger 10 umfasst ein auf Höhe einer Bordkante verlaufendes Strukturbauteil 12 in Form einer Schachtabdeckung oder dergleichen sowie ein weiteres, in Querrichtung verlaufendes Strukturbauteil 14, welches vorliegend beispielsweise als Seitenaufprallträger ausgebildet ist. Beide Strukturbauteile 12, 14 können dabei im Weiteren in Zusammenschau mit den Fig. 2a bis 10 auf noch näher erläuterte Weise geschaffen sein. An dieser Stelle sei schon angemerkt, dass die Strukturbauteile 12,14 Profile aus einem Metall, insbesondere Aluminium, oder einem FVK-Material sein können. Die Profile können offen ausgebildet sein oder aber vorzugsweise durch ein mittels Innenhochdruck umgeformtes Rohr gebildet sein. Die seitlichen Anbindungen an die weiteren Rahmenbauteile der Seitentür sowie die versteifenden Verrippungen sind durch Kunststoffanspritzungen entstanden.

Die mittlere Darstellung in Fig. 1 zeigt eine Trägerstruktur 16 für ein Frontendmodul eines Personenkraftwagens, wobei unter anderem ein Strukturbauteil 18 in Form eines Biegequerträgers vorgesehen sein kann, welches auf im Weiteren in Zusammenschau mit den Fig. 2a bis 9 erläuterte Weise ausgebildet ist. Das Strukturbauteil 18 in Form des Biegequerträgers stützt sich dabei unter Vermittlung von jeweiligen Energieabsorptionselementen (Crashboxen) 20 an nicht erkennbaren Längsträgern einer Hauptlängsträgerebene ab. Weiterhin erkennbar ist eine Kühlerbrücke 22 auf Höhe von nicht erkennbaren Längsträgern einer oberen Längsträgerebene sowie eine Mehrzahl von weiteren Bauteilen, beispielsweise zur Verbindung des Biegequerträgers 18 mit der Kühlerbrücke 22. Hier kann die Kühlerbrücke 22 als mittels Innenhochdruck umgeformtes Rohr gebildet sein und aus einem Metall, insbesondere Leichtmetall, oder einem FVK-Material bestehen. Die nach unten führenden Streben zum Biegequerträger 18 hin sind durch Kunststoffanspritzungen gebildet.

Schließlich ist in Fig. 1 in einer ausschnittsweisen Perspektivansicht das Strukturbauteil 18 in Form des Biegequerträgers näher erkennbar. Das Strukturbauteil 18 umfasst dabei wenigstens ein Trägerteil 24, welches vorliegend im Wesentlichen einen U-förmigen Querschnitt mit entsprechenden daran anschließenden Flanschen 26, 28 aufweist. Durch den U-förmigen Querschnitt ist das Trägerteil 24 zu einer Längsseite 30 hin offen ausgebildet. Im vorliegenden Fall ist das Trägerteil 24 - wie aus der mittleren Darstellung von Fig. 1 erkennbar ist - nach vorne hin über die gesamte Breite der Trägerstruktur 16 offen ausgebildet. Des Weiteren ist aus den beiden unteren Darstellungen von Fig. 1 erkennbar, dass das Trägerteil 24 vorliegend durch eine Versteifungsstruktur 32 aus Kunststoff zu einem Hybridbauteil verstärkt ist, wobei die Versteifungsstruktur eine Mehrzahl von Rippen 34 umfasst, welche sich zwischen einem Obergurt 36 und einem Untergurt 38 sowie nach hinten hin bis zu einem hinteren Schenkel 40 des Trägerteils 24 erstrecken. Mit anderen Worten nimmt die Versteifungsstruktur 32 im vorliegenden Fall im Wesentlichen den Raum zwischen Ober- und Untergurt 36, 38 bzw. dem hinteren Schenkel 40 des Trägerteils 24.

Durch die einzelnen Rippen 34 werden dabei eine Mehrzahl von Kammern 42 ausgebildet, welche im vorliegenden Ausführungsbeispiel gemäß Fig. 1 noch nicht verfüllt sind.

In der Darstellung der Fig. 1 links unten wird auf eine Ausführungsform eines Querträgers 19 hingewiesen, der das Cockpit trägt und der durch ein Profil, vorzugsweise ein durch Innenhochdruck umgeformtes Rohr bzw. Hohlprofil und an diesem mit vorzugsweise faserverstärktem Kunststoff angespritzte verschiedene Konsolen und seitliche Anbindungen an hier nicht gezeigte Längsträger gebildet ist.

Die Fig. 2a bis 2e zeigen nun mehrere Ausführungsformen dieses Strukturbauteils 18 in Form des Biegequerträgers gemäß den unteren beiden Darstellungen von Fig. 1, wobei prinzipiell natürlich auch die Strukturbauteile 12, 14 des Türträgers 10 gemäß der oberen Darstellung von Fig. 1 entsprechend gestaltet sein könnten.

Die Fig. 2a bis 2f zeigen jeweils eine ausschnittsweise Vorderansicht auf das Strukturbauteil 18 gemäß der unteren Darstellung von Fig. 1 sowie jeweils zugehörige drei Schnitte (A-A, B-B, C-C), welche jeweilige Querschnittsansichten durch das Strukturbauteil 18 repräsentieren. Bezogen auf die Hauptachsen des Fahrzeugs bedeutet dies, dass die jeweiligen Schnittdarstellungen entlang von jeweiligen, in Fahrzeuglängsrichtung (x-Richtung) bzw. in Fahrzeughochrichtung (z-Richtung) verlaufenden Schnittebenen dargestellt sind.

Dabei ist es allen Ausführungsformen zunächst gemeinsam, dass das Strukturbauteil 18 in Form des Biegequerträgers wiederum im Wesentlichen einen U-förmigen Querschnitt mit den Ober- und Untergurten 36,-38 sowie dem hinteren Schenkel 40 umfasst, wobei sich an den Ober- und Untergurt 36, 38 der jeweilige Flansch 26, 28 anschließt. Über diese Flansche 26, 28 kann - nach Abschluss der Herstellung des Strukturbauteils 18 - einschließlich fixiert werden. Die U-förmige bzw. hutförmige Gestaltung des Trägerteils 24 im Querschnitt ist den jeweiligen Querschnittsansichten zu entnehmen. Dabei sei angemerkt, dass die Öffnung zur entsprechenden Längsseite30 des Trägerteils 24 hin, nicht nur - wie im vorliegenden Fall - in Fahrtrichtung vorne liegen kann, sondern auch entgegengesetzt der Fahrtrichtung. Die Hutform des Trägerteils 24 ist dabei insbesondere bezüglich der Aufnahme von Aufprallenergie besonders günstig. Im vorliegenden Ausführungsbeispiel besteht das Trägerteil 24 aus einem Organoblech oder Metallblech, insbesondere einem gewichtsgünstigen Aluminiumblech, welches entsprechend umgeformt werden kann.

Die Rippen 34 der Versteifungsstruktur 32 bewirken dabei eine besonders günstige zusätzliche Versteifung des Trägerteils 24. Gleichzeitig tragen diese Verstrebungen bzw. Rippen 34 dazu bei, dass der Kraftfluss bei einem seitlichen Aufprall begünstigt wird, und somit die Energie auf die gesamte Karosserie verteilt wird.

Um eine noch höhere Stabilität und Festigkeit bzw. ein noch günstigeres Energieabsorptionsvermögen zu erreichen, werden insbesondere in kritischen Querschnittsbereichen des Strukturbauteils 18 die entsprechenden Kammern 42, welche durch die jeweiligen Rippen 34 bzw. das Trägerteil 24 begrenzt werden, mit einem weiteren Kunststoff 44 versehen. Dieser Kunststoff 44 ist unterschiedlich zu dem Kunststoff der Rippen 34 der Versteifungsstruktur 32 und vorzugsweise als Schaumstoff ausgebildet. Im vorliegenden Fall werden demzufolge die jeweiligen Kammern 42 entsprechend ausgeschäumt, wodurch sich eine vollständige Ausfüllung der jeweiligen Kammer 42 ergibt. Natürlich ist eine vollständige Ausfüllung der entsprechenden Kammer 42 nicht zwingendermaßen erforderlich. Da bei höheren Aufprallgeschwindigkeiten die Versteifungsstruktur 32 als erstes Element nachgeben wird, bildet der Kunststoff 44 bzw. Schaumstoff eine stützende Wirkung für diese Verstrebung und zögert das Versagen der Versteifungsstruktur 32 weiter hinaus, wobei einem entsprechenden Aufprall mehr Aufprallenergie absorbiert werden kann. Gleichzeitig kann durch den Schaumeinsatz die Wanddicke des Trägerteils 24 verringert werden, was eine Gewichtsreduzierung mit sich bringt.

Wie nun aus Fig. 2a erkennbar ist, sind bei der dortigen Ausführungsform sämtliche Kammern 42, welche zwischen den einzelnen Rippen 34 bzw. zwischen diesen und dem Trägerteil 24 entstehen, Ausfüllungen mit dem entsprechenden Schaumstoff bzw. Kunststoff 44 vorgesehen.

Die Ausführungsform gemäß Fig. 2b lässt hingegen eine Ausführungsform erkennen, bei welcher die jeweiligen zentralen Kammern 42 nicht ausgeschäumt sind, sondern vielmehr lediglich die jeweiligen Kammern, welche an den Obergurt 36 bzw. Untergurt 38 angrenzen.

Im Unterschied hierzu werden bei der Ausführungsform gemäß Fig. 2c lediglich die zentralen Kammern 42 ausgefüllt, während die an den Ober- bzw. Untergurt 36, 38 angrenzenden Kammern 42 nicht mit Kunststoff 44 bzw. Schaumstoff verfüllt werden. Die Ausführungsform gemäß Fig. 2d zeigt einen räumlich dreieckförmigen Verbund von Kammern 42, welche durch den Kunststoff 44 bzw. Schaumstoff verfüllt sind.

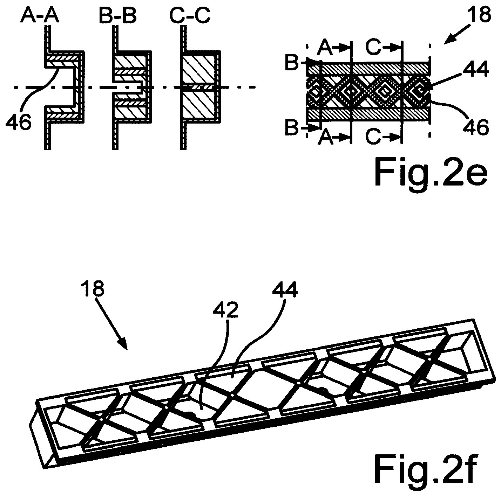

Schließlich zeigt die Ausführungsform gemäß Fig. 2e eine volle Ausschäumung der einzelnen Kammern 42, wobei zusätzlich entsprechende Schaumrippen 46 vorgesehen sind. Die Fig. 2f zeigt eine Ausschäumung der mittleren fünf Kammern 42 des Strukturbauteils 18 durch den Kunststoff 44.

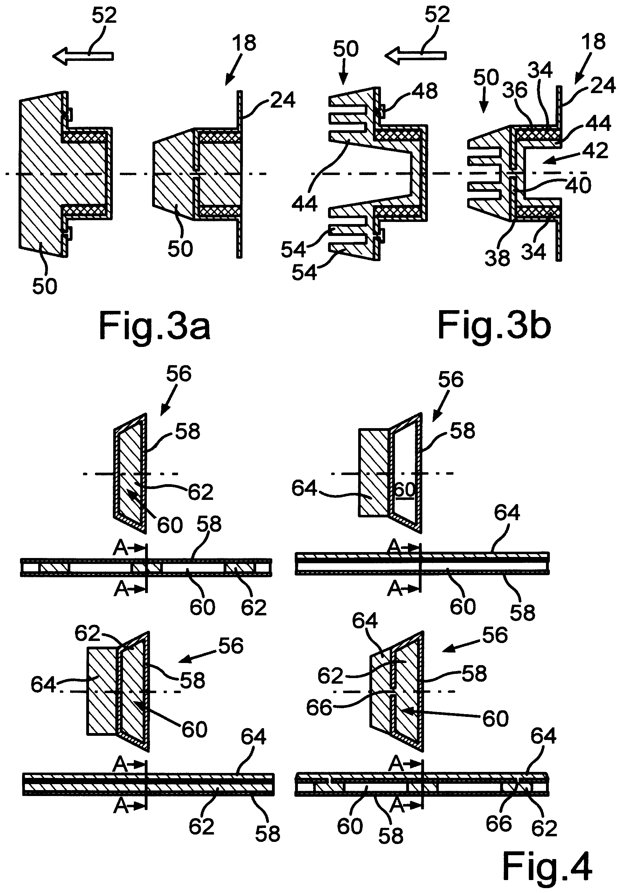

Mit der Verwendung des Kunststoffs 44, welcher vorliegend als Strukturschaum ausgebildet ist, kann dieser gleichzeitig als Absorber für den Fußgängerschutz verwendet werden. Die Ausführungen für die jeweilige Fahrtrichtung sind dabei analog bei den Fig. 3a und 3b auch den Fig. 2a bis 2f entnehmbar.

Zusätzlich zu dem Stoffschluss zwischen dem Kunststoff 44 bzw. dem Schaumstoff einerseits und dem Kunststoff der Versteifungsstruktur 32 bzw. dem Trägerteil 24 können auch Formschlusselemente 48, welche in den Fig. 3a und 3b erkennbar sind, vorgesehen sein. Diese Formschlusselemente 48 können dabei insbesondere auch zwischen dem Kunststoff 44 bzw. Schaumstoff einerseits und der Versteifungsstruktur 32 und/oder dem Trägerteil 24 vorgesehen sein. Dabei ist es beispielsweise denkbar, entsprechende Durchgangsöffnungen in die Versteifungsstruktur 32 oder das Trägerteil 24 einzubringen, welche dann von dem Kunststoff bzw. Schaumstoff 44 durchsetzt sind. Der Schaumstoff 44 kann dabei einen entsprechend hintergreifenden Kopf oder dergleichen aufweisen. Auch zwischen dem Kunststoff der Versteifungsstruktur 32 und dem Trägerteil 24 können derartige Formschlusselemente 40 vorgesehen sein. Mit anderen Worten kann zusätzlich zum Stoffschluss, basierend auf der Metallbeschichtung zwischen den Blechen des Trägerteils 24 und dem Spritzgussmaterial der Versteifungsstruktur bzw. dem Kunststoff bzw. Schaumstoff 44 und der Verbundhaftung, zwischen dem Kunststoff der Versteifungsstruktur 32 entsprechende Formschlusselemente 48 vorgesehen sein. Hierdurch verbleibt der Schaumstoff in der verrippten Struktur bzw. in den Kammern und löst sich auch unter größeren mechanischen Lasten nicht aus diesen heraus. Der Schaumstoff selbst zeigt dabei eine besonders hohe Eigensteifigkeit und verformt sich nicht.

Auch kann das Trägerteil 24 hinterschäumt sein. Aus den Fig. 3a und 3b ist des Weiteren erkennbar, dass mittels des Kunststoffs bzw. Schaumstoffs 44 nicht nur eine jeweilige Kammer 42 - gebildet durch die Versteifungsstruktur 32 und/oder in das Trägerteil 24 - ausgefüllt sein kann, sondern vielmehr kann auch ein Bereich 50 des Schaumstoffs bzw. Kunststoffs 44 vorgesehen sein, welcher außerhalb der Kammer 42 angeordnet ist. Dieser Bereich 50 kann beispielsweise - wie in Fig. 3a links dargestellt ist - auf einer in Fahrtrichtung (mit dem Pfeil 52 angedeutet) gelegenen Seite eines als U-Profil ausgestalteten Trägerteils 24 sein, welches sich quer zur Fahrtrichtung erstreckt. Gemäß der rechten Darstellung in Fig. 3a kann der Bereich 50 auch entgegen der Fahrtrichtung voll ausgeschäumt sein. Insgesamt handelt es sich bei den Ausführungsformen gemäß Fig. 3a um volumige Aufschäumungen für den Fußgänger- und Fahrzeugschutz im U-Profil und vorgelagertem U-Profil.

Die Ausführungsform gemäß Fig. 3b, bei welcher die Fahrtrichtung ebenfalls mit dem Pfeil 52 dargestellt ist, zeigt links ein U-Profil in Fahrtrichtung als Rippen 54 ausgeschäumt und rechts ein U-Profil entgegen der Fahrtrichtung als Rippen 54 ausgeschäumt. Mit anderen Worten zeigt die Ausführungsform gemäß Fig. 3b eine rippenförmige Aufschäumung mit Kunststoff 44 für den Fußgänger- und Fahrzeugschutz im U-Profil und vorgelagertem U-Profil.

Wie im Weiteren noch näher erläutert werden wird, kann das Trägerteil 24 des Strukturbauteils 18 nicht nur als Blech ausgebildet sein, sondern beispielsweise auch als Organoblech, insbesondere als vorzugsweise mit einem aus Litzen, Fasern und Seilen gebildeten Netz verstärktes Organoblech.

In Fig. 4 sind in jeweiligen Längsschnittansichten und zugehörigen Querschnittansichten vier Ausführungsformen eines Strukturbauteils 56 nach einer alternativen Ausführungsform dargestellt. Dabei sind die Strukturbauteile 56 wiederum jeweils als Biegequerträger für eine Trägerstruktur 16 eines Frontendmoduls ausgebildet. In vorbeschriebener Weise können diese Strukturbauteile 56 auch einen anderen Verwendungszweck im Fahrzeug, also insbesondere mit den im Zusammenhang mit Fig. 1 beschriebenen Anwendungen finden.

Die Besonderheit in der Ausführungsform gemäß Fig. 4 liegt darin, dass das Strukturbauteil 56 wenigstens ein Trägerteil 58 umfasst, welches im vorliegenden Fall einen Hohlraum 60 außenumfangsseitig umschließt. Im vorliegenden Ausführungsbeispiel ist das Trägerteil 58 als umlaufend geschlossenes Metallrohr, insbesondere Aluminiumrohr ausgebildet, welches auf im Weiteren noch näher beschriebene Weise gegebenenfalls auch durch Innenhochdruckumformen bearbeitet wird bzw. worden ist. Innerhalb des Hohlraums 60 ist dabei wiederum eine Versteifungsstruktur 62 aus Kunststoff vorgesehen, wobei dieser Kunststoff 62 ein Schaumstoff bzw. Kunststoffschaum wie z. B. PUR ist. Wie nun aus der linken oberen Darstellung von Fig. 4 erkennbar ist, sind dort eine Mehrzahl von lediglich lokalen Versteifungsstrukturen bzw. Ausschäumungen aus Kunststoff 62 vorgesehen. Diese lokalen Ausschäumungen werden dadurch erreicht, dass ein entsprechender Kunststoffschaum verwendet wird, welcher beispielsweise durch selbstbildende Barrieren begrenzt wird. Mit anderen Worten wird ein Kunststoffschaum 62 verwendet, welcher sich nicht unkontrolliert ausdehnt, sondern vielmehr den Hohlraum 60 lokal verschließt. Hierzu erhält das Trägerteil 58 zumindest eine Umfangsöffnung, über die der Schaum bzw. das schaumbildende Material eingespritzt bzw. eingebracht wird. Die Öffnung weist einen Durchmesser von etwa 10mm auf. Die Öffnung kann während des Innenhochdruckumformens durch einen integrierten Lochvorgang ausgebildet werden. Das Ausschäumen des Trägerteils 58 findet vorzugsweise in einem nachgelagerten Arbeitsschritt statt, wenn das Hybridbauteil praktisch schon fertig ausgebildet ist. Vorteilhafter Weise werden die Öffnungen in der neutralen Faser des Trägerteils 58 platziert. Beispielsweise werden Öffnungen im Scharnierbereich des Türträgers 10 der Fig. 1 ausgebildet und über diese das dort in einer geschwungenen U-Form umfänglich geschlossene Hohlprofil mit einem versteifenden Schaum lokal gezielt befüllt, da dort die mechanischen Dauerbelastungen sehr groß sind. In gleicher Weise wird das Hohlprofil der in der mittleren Darstellung der Fig. 1 gezeigten Trägerstruktur 16, das die Kühlerbrücke 22 beinhaltet, an den hochbelasteten Stellen, an denen jeweils eine vertikale Strebe angebunden ist, die unten mit der Crashbox 20 verbunden ist; über Umfangsöffnungen des Hohlprofils lokal versteifend ausgeschäumt.

Wie aus der rechten oberen Darstellung von Fig. 4 erkennbar ist, wird dort eine zusätzliche Versteifungsstruktur aus Kunststoff 64 eingesetzt, welche außerhalb des Hohlraums 60 des Trägerteils 58 angeordnet ist. Hierdurch kann der Kunststoff 64 zur Funktionserfüllung des Fußgängerschutzes vorliegend als Biegequerträger ausgebildeten Strukturbauteil 56 genutzt werden. Der außenseitig des Trägerteils 58 eingesetzte Kunststoff bzw. Schaumstoff 64 kann dabei identisch sein mit demjenigen Kunststoff 62, welcher für die Versteifungsstruktur innerhalb des Hohlraums 60 des Trägerteils 58 genutzt wird. Alternativ sind jedoch auch unterschiedliche Kunststoffe 62, 64 denkbar.

Die linke untere Ausführungsform zeigt ein Strukturbauteil 56, bei welchem sowohl der Hohlraum 60 des Trägerteils 58 vollständig mit Kunststoff 62 befüllt ist wie auch außenseitig des Trägerteils 58 entsprechend Kunststoff 64 vorgesehen ist. Beide Kunststoffe 62, 64 sind wiederum als Kunststoffschaum ausgebildet, beispielsweise aus PUR. Schließlich zeigt die rechte untere Ausführungsform ein Strukturbauteil 56 bei welchem innerhalb des Hohlraums 60 des Trägerteils wiederum partiell Kunststoff 62 vorgesehen ist. Außerhalb des Trägerteils 58 ist wiederum ein Kunststoff 64 in Form eines Kunststoffschaums vorgesehen, analog zu den vorbeschriebenen Ausführungsformen. Die Besonderheit bei der Ausführungsform gemäß der rechten unteren Darstellung in Fig. 4 liegt des Weiteren darin, dass innerhalb des Trägerteils 58 Durchgangsöffnungen 66 vorgesehen sind, über welche der Kunststoff 62 und der Kunststoff 64 miteinander verbunden sind. Diese können dann auch in einem Fertigungsverfahren ein- bzw. aufgebracht werden.

Insgesamt ist somit aus Fig. 4 erkennbar, dass vorliegend ein Strukturbauteil 56 geschaffen ist, welches durch eine Versteifungsstruktur in Form des Kunststoffs 62 und/oder 64 verstärkt ist. Durch die Ausschäumung können kritische Querschnitte verstärkt werden, wobei auch hier durch die Stützwirkung des Schaumstoffs 62 die Wanddicke des Trägerteils 58 reduziert werden kann. Gleichzeitig kann der Schaumstoff genutzt werden, um mittels der Steifigkeitserhöhung die Funktion des Fußgänger- und Insassenschutzes (Teil 64) dort über den Absorber zu erfüllen.

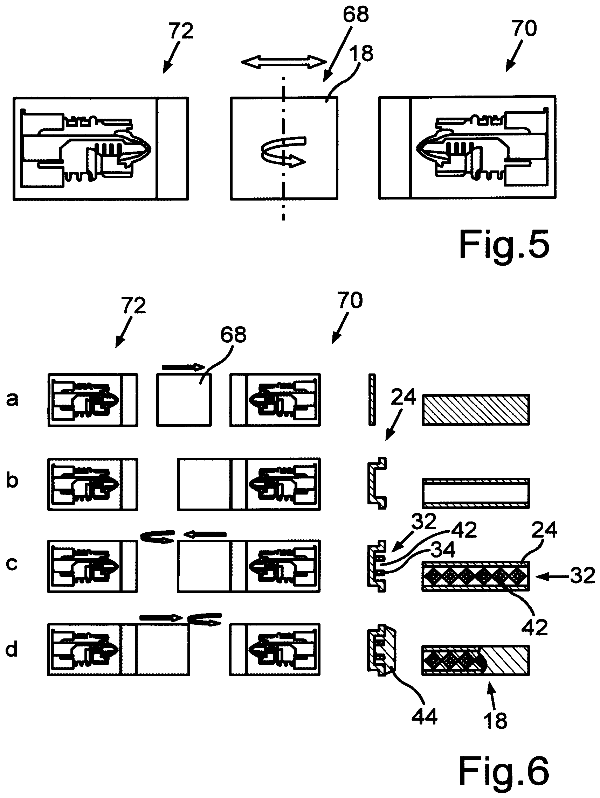

Fig. 5 zeigt in einer lediglich schematischen Darstellung, in welcher Weise ein Strukturbauteil 18 gemäß den Fig. 2a bis 2e prinzipiell herstellbar ist. Dabei soll das Strukturbauteil 18 in einem Werkzeug bzw. Einrichtung geschaffen werden. Im vorliegenden Fall handelt es sich um eine Zwei-Komponenten-Spritzgussmaschine, wobei gegebenenfalls noch ein Umformprozess mit eingeschlossen sein kann. In Fig. 5 ist dabei ein Werkzeugteil 68 erkennbar, mittels welchem das Strukturbauteil 18 in zwei Fertigungsschritten mit den entsprechenden beiden Kunststoffen - der Versteifungsstruktur 32 und den Schaumeinlagen 44 - hergestellt werden kann. Das Werkzeugteil ist dabei beispielsweise drehbar ausgebildet, so dass die jeweiligen Spritzgussdüsen 70 bzw. 72 oder dergleichen Einrichtungen zugewandt werden kann. Die Spritzgussdüse 70 dient dabei zum Aufbringen der aus Kunststoff gestalteten Versteifungsstruktur 32 auf dem Trägerteil 24. Die Spritzgussdüsen 72 hingegen dienen zur Aufbringung des Kunststoffs bzw. Schaumstoffs 44. Es ist ersichtlich, dass nach dem Drehen bzw. Wenden des Werkzeugteils 68 jeweils das entsprechende Werkzeug - mit der korrespondierenden Spritzgussdüse 70 oder 72 - geschlossen werden kann, wonach dann der jeweilige Verfahrensschritt vorgenommen werden kann. Im Einzelnen sind diese Verfahrensschritte also das zumindest bereichsweise Aufbringen der Versteifungsstruktur 32 auf das Trägerteil 24, so dass insgesamt ein Hybridbauteil entsteht, sowie das anschließende Anordnen bzw. Aufbringen des Kunststoffs 44, welcher vorliegend als Kunststoffschaum ausgebildet ist.

Fig. 6 zeigt beispielhaft vier Verfahrensschritte a, b, c, d, in welcher Weise das Strukturbauteil 18 gemäß den Fig. 2a bis 2e geschaffen werden kann.

Beim Verfahrensschritt a wird zunächst mittels eines Greifers das entsprechende Halbzeug des Trägerteils 24, welches vorliegend insbesondere ein Organoblech ist, in den Bereich des Werkzeugteils 68 eingelegt. Der Greifer, der das ggf. mit einer metallischen Netzverstärkung versehene Organoblech auf das Werkzeug legt, legt dabei die oberen Hälften so um, dass nahezu das Hubprofil des Trägerteils 24 erreicht wird. Nunmehr werden gemäß Verfahrensschritt b die Werkzeugteile 68 und 70 zusammengefahren, wobei ein Umformprozess stattfindet, welcher das rechts in Fig. 6 im Längsschnitt bzw. im Querschnitt gezeigte Trägerteil 24 in seine endgültige Form bringt.

Gemäß Verfahrensschritt c wird anschließend der Kunststoff der Versteifungsstruktur 32 auf der korrespondierenden offenen Seite des Trägerteils 24 angespritzt. Sodann wird das Werkzeugteil 68 und das Werkzeugteil 70 - welches die Spritzgussdüse für den Kunststoff der Versteifungsstruktur 32 umfasst - geöffnet. Anschließend wird der das Trägerteil 24 mit der Versteifungsstruktur 32 tragende Werkzeugteil 68 entsprechend verschwenkt und dem Werkzeugteil 72, welches die Spritzgussdüse für den Kunststoff bzw. Schaumstoff 44 umfasst, zugewandt.

Gemäß Verfahrensschritt d werden anschließend die beiden Werkzeugteile 68, 72 geschlossen und der Kunststoff 44 in Form des Schaumstoffs an denjenigen Stellen angespritzt, an welchen dieses gemäß den Fig. 2a bis 2e gewünscht ist. Es ist klar, dass die Werkzeugteile 68, 70, 72 jeweils erst geöffnet werden, wenn die jeweilige Kunststoffschmelze erstarrt ist. Insbesondere beim Herstellen des Schaumstoffs 44 dienen die Werkzeugteile 68, 72 auch als Formgeber, damit der Schaumstoff nicht unkontrolliert expandiert. Die Oberfläche des jeweiligen Werkzeuges hat dabei eine Beschichtung, welche eine stoffschlüssige Verbindung zwischen im Kunststoffschaum 44 und dem Werkzeug nicht zulässt, so dass nach dem Entformen keine Schaumreste auf dem Werkzeug verbleiben.

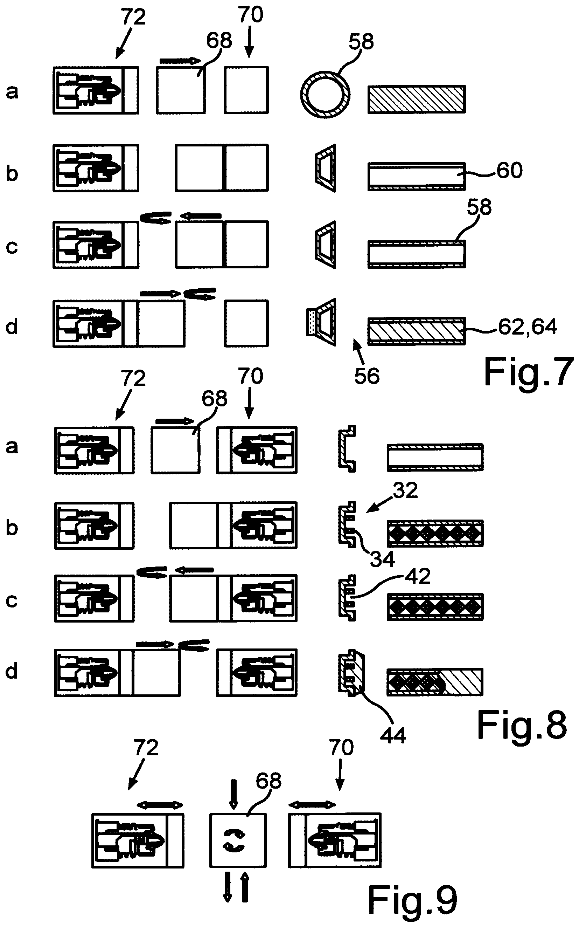

Um eine hohe Stückzahl zu fertigen, kann das Werkzeugteil 68, welches auch als Werkzeugwürfel bezeichnet wird, translatorisch ausgerichtet sein, wobei die jeweiligen Werkzeughälften 70, 72 an dem mittleren Werkzeugteil 68 bzw. Werkzeugwürfel herangefahren werden. Hierdurch können auch zwei Strukturbauteile 18 parallel erzeugt werden. Die freien Seiten können in diesem Zeitraum zur Rohteilaufnahme und Bauteilabgabe bzw. einem weiteren zwischengeschalteten Prozess wie beispielsweise einer Reinigung oder das Einlegen von Einlegern, genutzt werden. Dies ist unter anderem auch in dieser Weise der Fig. 9 entnehmbar.

Fig. 7 zeigt analog zur Fig. 6 in einer weiteren schematischen Darstellung eine Abfolge von vier Verfahrensschritten a, b, c, d mittels welchem ein Strukturbauteil 56 gemäß Fig. 4 erzeugt werden kann. Gemäß Verfahrensschritt a wird dabei zunächst ein Rohling bzw. Halbzeug des Trägerteils 58, welches vorliegend als Metallhohlrohr oder anderes Hohlprofil ausgebildet ist, die entsprechende Vorrichtung im Bereich des dortigen Werkzeugteils 68 eingelegt. Gemäß Verfahrensschritt b) wird dieser Rohling bzw. das Halbzeug entsprechend in einem Innenhochdruckumformschritt umgeformt, so dass das rechts im Längsschnitt bzw. Querschnitt dargestellte Trägerteil 58 erzeugt wird.

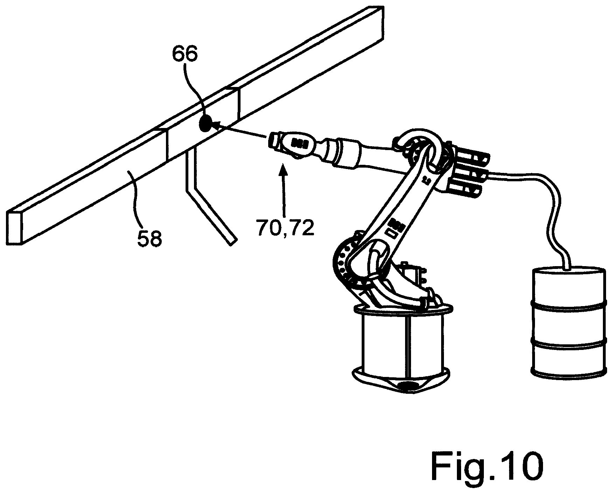

In den Verfahrensschritten c und d werden dabei die jeweiligen Kunststoffe 62 bzw. 64 innerhalb des Hohlraums 60 bzw. außenseitig des Trägerteils 58 ein- bzw. aufgebracht. Entsprechend wird hierzu jeweils der das Trägerteil 58 tragende Werkzeugteil 68 korrespondierenden Werkzeugteil 70 oder 72, welche jeweilige Spritzgussdüsen für den als Schaumstoff ausgebildeten Kunststoff 62, 64 umfassen, zusammengefahren und geschlossen, wie besonders deutlich in Fig. 10 erkennbar ist, in der ein Roboter die Werkzeugteile 70 oder 72 trägt und verfährt. Über die Öffnung 66 wird der Kunststoffschaum 62,64 mittels der Düsen 70,72 in das Trägerteil 58 eingespritzt. Zwischen den beiden Verfahrensschritten c und d wird dabei der Werkzeugteil 68 in bekannter Weise gewendet. Das Trägerteil 58 kann insbesondere aus einer Aluminiumlegierung, einem FVK oder einem hochfesten Stahl bestehen. Gesondert muss betrachtet werden, dass der jeweilige Kunststoff bzw. Kunststoffschaum 62, 64 nach einem Zeitraum aushärtet, so dass für größere Bauteile bewegbare Düsen eingesetzt werden müssen, um eine optimale Ausschäumung bzw. Anschäumung des Trägerteils 58 zu gewährleisten. Andernfalls würde beispielsweise bei einer lokalen Ausschäumung durch die schnelle Verfestigung des Schaumes gegebenenfalls nicht die gewünschte Geometrie oder Dichte des Kunststoffs bzw. der Versteifungsstruktur 32 erreicht werden. Als im Rahmen der Erfindung mitumfasst ist es zu betrachten, dass die Kunststoffe 62 und 64 jeweils auch nur für sich genommen aufgebracht werden können. Diese können entweder aus demselben Material bestehen oder aber es werden unterschiedliche Kunststoffmaterialien eingesetzt.

Fig. 8 zeigt analog zu Fig. 6 ein weiteres Verfahren zur Herstellung eines Strukturbauteils 18 gemäß den Fig. 2a bis 2e, wobei sich dieses Verfahren von demjenigen gemäß Fig. 6 insbesondere dadurch unterscheidet, dass anstelle eines Organgoblechs ein Metallblech eingesetzt wird. Dieses Metallblech kann insbesondere aus einer Aluminiumlegierung oder einem hochfesten Stahl bestehen. Hierbei wird das schon vorgeformte Trägerteil 24, welches beispielsweise im Stranggussverfahren, im Innenhochdruckumformverfahren oder durch Tiefziehen umgeformt worden ist, in einem ersten Verfahrensschritt a in den entsprechenden Werkzeugteil 68 eingelegt und gemäß den Verfahrensschritten b, c, d mit dem Kunststoff der Verrippungsstruktur 32 bzw. dem Schaumstoff 44 versehen.

Insgesamt ist somit erkennbar, dass durch die vorliegenden Verfahren ein jeweiliges Strukturbauteil 12, 14,18, 56 geschaffen werden kann, dessen Bruchlast, Strukturintegrität und Energieabsorptionspotential erheblich höher ist als bei bislang bekannten Bauteilen. Die Rippen 34 der Versteifungsstruktur 32 versteifen dabei das zugehörige Trägerprofil 24, weil durch den Kunststoff bzw. Schaumstoff 44 eine zusätzliche Verstärkung stattfindet. Hierdurch kann insgesamt ein Trägerteil 24 eingesetzt werden, welches ein geringes Gewicht aufweist. Somit wird auch insgesamt ein Strukturbauteil 18 geschaffen, welches äußerst leicht ist.

Insbesondere wenn das Strukturbauteil 18 oder 56 als Biegequerträger eingesetzt wird, hat dies bei leichteren Kollisionen den Vorteil, dass eine ausreichende Elastizität durch den Kunststoff 44 gegeben ist, um den Stoß abzufangen, ohne eine Deformation bzw. plastische Verformung des Strukturbauteils 18, 56 zu haben. Dies verringert die Reparaturkosten bei Kraftwagen. Weiterhin zeichnen sich die beschriebenen Verfahren durch geringe Fertigungskosten aus. Dies unter anderem auch deshalb, weil weitgehend Verbindungselemente eingespart werden können. Zusätzlich sind die beschriebenen Verfahren mit geringem Zeitaufwand sowohl in der Fertigung wie auch in der Montage verbunden, wobei insbesondere durch das vorbeschriebene Innenhochdruckumform- und Spritzgussverfahren geringe Fertigungstoleranzen einzuhalten sind.

Als im Rahmen der Erfindung mitumfasst ist es zu betrachten, dass die vorliegenden Strukturbauteile 12, 14, 18, 19, 56 nicht nur bei Seitentüren bzw. Front- oder Eckendmodulen oder anderen Querträgern eingesetzt werden können, sondern darüber hinaus an beliebigen Stellen, welche insbesondere bei einer Kollision des Kraftwagens und einer entsprechenden Aufprallenergie beaufschlagt werden.

## Patentansprüche

1. Verfahren zur Herstellung eines Strukturbauteils (18,19) für einen Kraftwagen, bei welchem wenigstens ein Trägerteil (24), insbesondere ein FVK- oder Metallträgerteil, zumindest bereichsweise durch eine Versteifungsstruktur (32) aus Kunststoff zu einem Hybridbauteil verstärkt wird, wobei wenigstens eine Kammer (42) des Hybridbauteils zumindest partiell durch die Versteifungsstruktur (32) begrenzt ist, wobei die Versteifungsstruktur (32) an das Trägerteil (24) angespritzt wird,
und wobei
in der wenigstens einen Kammer (42) ein weiterer Kunststoff (44), insbesondere ein Schaumstoff, angeordnet wird
**dadurch gekennzeichnet, dass**
der Kunststoff der Versteifungsstruktur (32) und der weitere Kunststoff (44), insbesondere der Schaumstoff, in derselben Einrichtung geschaffen werden in welcher ein drehbares Werkzeugteil 68 zwei Spritzgussdüsen 70 und 72 mit einerseits einer Spritzgussdüse 70 zum Aufbringen der aus Kunststoff gestalteten Versteifungsstruktur 32 auf dem Trägerteil 24 und andererseits einer Spritzgussdüse 72 zum Aufbringen des Kunststoffs bzw. des Schaumstoffs 44 beinhaltet.

## Claims

1. Method for producing a structural element (18, 19) for a motor vehicle, wherein at least one support part (24), in particular a fibre-reinforced plastic or metal support part, is at least in some regions reinforced by a reinforcement structure (32) of a plastic material to form a hybrid component, wherein at least one chamber (42) of the hybrid component is at least partially bounded by the reinforcement structure (32), wherein the reinforcement structure (32) is applied to the support part (24) by injection mounding and wherein a further plastic material (44), in particular a foam, is placed in the at least one chamber (42),
**characterised in that**
the plastic material of the reinforcement structure (32) and the further plastic material (44), in particular the foam, are produced in the same facility, in which a rotatable tool part (68) comprises two injection moulding nozzles (70) and (72) with on the one hand an injection moulding nozzle (70) for applying the reinforcement structure (32) made of plastic to the support part (24) and on the other hand an injection moulding nozzle (72) for applying the plastic material or the foam (44).

## Revendications

1. Procédé de fabrication d'une pièce structurale (18, 19) pour un véhicule, au moins une partie de support (24), en particulier une partie de support en métal ou en plastique renforcé de fibres étant renforcée au moins à certains endroits par une structure de renfort (32) en plastique par rapport à une pièce structurale hybride, au moins une chambre de la partie hybride étant limitée au moins partiellement par la structure de renfort (32), la structure de renfort (32) étant moulée par injection sur la partie de support (24), et dans ladite chambre (42) est disposé un autre plastique (44), en particulier une mousse, **caractérisé en ce que** le plastique de la structure de renfort (32) et l'autre plastique (44), en particulier la mousse, sont conçus dans le même équipement dans lequel une partie d'outil (68) rotatif contient deux buses d'injection (70 et (72), une des buses d'injection (70) servant à appliquer la structure de renfort (32) conçue en plastique sur la partie de support et l'autre buse d'injection (72) servant à appliquer le plastique ou la mousse (44).
